(19) **Europäisches Patentamt**

**European Patent Office**

**Office européen des brevets**

(11) **EP 1 328 081 B1**

(12) # EUROPEAN PATENT SPECIFICATION

(45) Date of publication and mention
of the grant of the patent:
**09.11.2005 Bulletin 2005/45**

(51) Int Cl.7: **H04L 1/00**

(21) Application number: **02250273.6**

(22) Date of filing: **15.01.2002**

(54) **SNR based bandwidth management for a DSL modem pool**

SNR basierte Bandbreitenverwaltung für einen DSL modempool

Gestion de largeur de bande basée sur SNR pour un ensemble de modems

(84) Designated Contracting States:
**AT BE CH CY DE DK ES FI FR GB GR IE IT LI LU MC NL PT SE TR**

(43) Date of publication of application:
**16.07.2003 Bulletin 2003/29**

(73) Proprietor: **Actelis Networks Inc.**
**Fremont, CA 94538 (US)**

(72) Inventor: **Kantschuk, Amir**
**Ramat Gan 52284 (IL)**

(74) Representative: **Garratt, Peter Douglas et al**
**Mathys & Squire**
**120 Holborn**
**London EC1N 2SQ (GB)**

(56) References cited:
**WO-A-00/54423       WO-A-01/35614**
**US-A- 5 504 776      US-A- 5 983 101**
**US-B1- 6 310 909**

## Description

The present invention relates to telecommunications systems in general, and more particularly to methods and apparatus for bandwidth management for DSL modem pools.

The ever-increasing demand for high-speed data communications services and greater bandwidth is largely due to the popularity of the Internet and other data-intensive, high bandwidth applications. Both businesses and consumers are demanding higher bandwidth connections and faster Internet access. Another source for this demand is the increasing use by businesses of data communications networks (including traffic over the Internet) for the transmission of documents and electronic mail.

Digital Subscriber Loop (DSL) technology provides one approach to addressing the demand for high-speed telecommunications service. DSL technology refers to several types of services that use advanced modem elements to transmit digital signals from a data source over copper wires. Many telephone companies have embraced DSL technology as an immediate broadband solution to serve the current demand by getting more out of their existing copper infrastructure. DSL modem elements permit high data rate transmission of data over the public switched telephone network (PSTN) at multiple megabit speeds using sophisticated signal processing techniques that permit voice and data to travel simultaneously over the same analog copper twisted pair wire.

Management of co-interfering modems in a modem pool, such as where two or more modem connections are carried via the same copper wire bundle, is faced with several difficulties. Current modem pool arrangements call for initializing one or more modems in a modem pool with a large predetermined margin, thereby diminishing throughput. Furthermore, when initializing a single modem in a modem pool, existing systems do not compensate for the co-interference of other modems that share the same bundle.

Reference is directed to WO 00/54423 which discloses a method for adapting DSL link parameters including the steps of establishing a maximum transmission modulation density, initiating communication at a fraction of a final rate and interactively increasing the rate in steps including measurement of a signal to noise ratio.

One aspect of the present invention is a system for managing overall PSD in a wire bundle by controlling the PSD of each modem element in a modem pool in such a way that the overall throughput is optimized while the overall PSD complies with PSD regulations. The present invention also provides for static and dynamic bandwidth management that maximizes the overall throughput of a transmission that is spread across a modem pool and its SNR while minimizing the overall BER.

Static bandwidth management may be employed at system start-up by setting a rate for each modem in a modem pool in a way that maximizes the aggregate bit rate of the entire modem pool. The process preferably provides a consistent result for consecutive processes. Dynamic bandwidth management is employed continually at steady state to preserve the system's SNR margin. Since DSL environments suffer from temporal effects such as external disturbances, temperature shifts, etc., it is desirable to manage bit rates after initial system start-up to minimize SNR and BER fluctuations due to such effects.

One aspect of the present invention is a method for managing the bandwidth of a modem pool having at least two co-interfering modems, the method comprising measuring an SNR margin for at least two of said co-interfering modems and adjusting the bit rate B of each of said co-interfering modems $i$ such that SNR margin of each of said co-interfering modems is between a first and a second predetermined threshold according to the formula

$$B_i^{(n+1)} = B_i^{(n)} + \left( B_i^{(n)} \cdot \frac{M_i^{(n)}}{SNR_{ref}} \right) + w_i^{(n)}$$

wherein: $M_i$ is the SNR margin of the of the modem $i$ being adjusted, $SNR_{ref}$ is the SNR that corresponds to a maximum allowable BER, and $w_i$ is uniformly distributed noise over [-r/2, r/2] where $r$ is a minimum bit rate increment.

In another aspect of the present invention the measuring step comprises measuring the SNR margin with respect to a maximum allowable BER.

In another aspect of the present invention the method further includes setting any of the modems in the modem pool to a first bit rate prior to the measuring step.

In another aspect of the present invention the measuring step is performed for each of the modems concurrently.

In another aspect of the present invention the adjusting step is performed for each of the modems concurrently.

In another aspect of the present invention the setting step is performed for each of the modems concurrently.

In another aspect of the present invention the at least two co-interfering modems use different modulation schemes, the $SNR_{ref}$ differs for each of said co-interfering modems, and each $SNR_{ref}$ corresponds to one of said modulation schemes.

In another aspect of the present invention the measuring and adjusting steps are performed a plurality of iterations.

In another aspect of the present invention the measuring and adjusting steps are performed a plurality of iterations until the SNR margin of all of the modems have been optimized such that the overall bit rate no longer improves with each iteration.

In another aspect of the present invention the measuring and adjusting steps are performed a predetermined number of iterations.

Another aspect of the present invention is apparatus for managing the bandwidth of a modem pool having at least two co-interfering modems comprising means for measuring an SNR margin for at least two of said co-interfering modems and means for adjusting the bit rate $B$ of each of said co-interfering modems $i$ such that SNR margin of each of said co-interfering modems is between a first and a second predetermined threshold according to the formula

$$B_i^{(n+1)} = B_i^{(n)} + \left( B_i^{(n)} \cdot \frac{M_i^{(n)}}{SNR_{ref}} \right) + w_i^{(n)}$$

wherein: $M_i$ is the SNR margin of the of the modem $i$ being adjusted, $SNR_{ref}$ is the SNR that corresponds to a maximum allowable BER, and $w_i$ is uniformly distributed noise over $[-r/2, r/2]$ where $r$ is a minimum bit rate increment.

In another aspect of the present invention the means for measuring measures the SNR margin with respect to a maximum allowable BER.

In another aspect of the present invention the apparatus further includes means for setting any f the modems in the modem pool to a first bit rate prior to the measuring step.

In another aspect of the present invention the means for adjusting is operative to adjust each of the modems concurrently.

In another aspect of the present invention the means for setting is operative to set each of the modems concurrently.

In another aspect of the present invention the at least two co-interfering modems use different modulation schemes, the $SNR_{ref}$ differs for each of the co-interfering modems, and the each $SNR_{ref}$ corresponds to one of the modulation schemes.

In another aspect of the present invention the means for measuring and adjusting are operative to measure and adjust a plurality of iterations.

In another aspect of the present invention the means for measuring and adjusting are operative to measure and adjust a plurality of iterations until the SNR margin of all of the modems have been optimized such that the overall bit rate no longer improves with each iteration.

In another aspect of the present invention the means for measuring and adjusting are operative to measure and adjust a predetermined number of iterations.

In another aspect of the present invention the first and second thresholds vary for at least two of the co-interfering modems.

In another aspect of the present invention a minimum and a maximum bit rate vary for at least two of the co-interfering modems.

BRIEF DESCRIPTION OF THE DRAWINGS

The present invention will be understood and appreciated more fully from the following detailed description by way of example taken in conjunction with the appended drawings in which:

Fig. 1 is a simplified pictorial illustration of a modem pool arrangement useful in understanding the present invention;
Fig. 2 is a simplified flowchart illustration of a method of static bandwidth management of the system of Fig. 1, operative in accordance with a preferred embodiment of the present invention; and
Fig. 3 is a simplified flowchart illustration of a method of dynamic bandwidth management of the system of Fig. 1, operative in accordance with a preferred embodiment of the present invention.

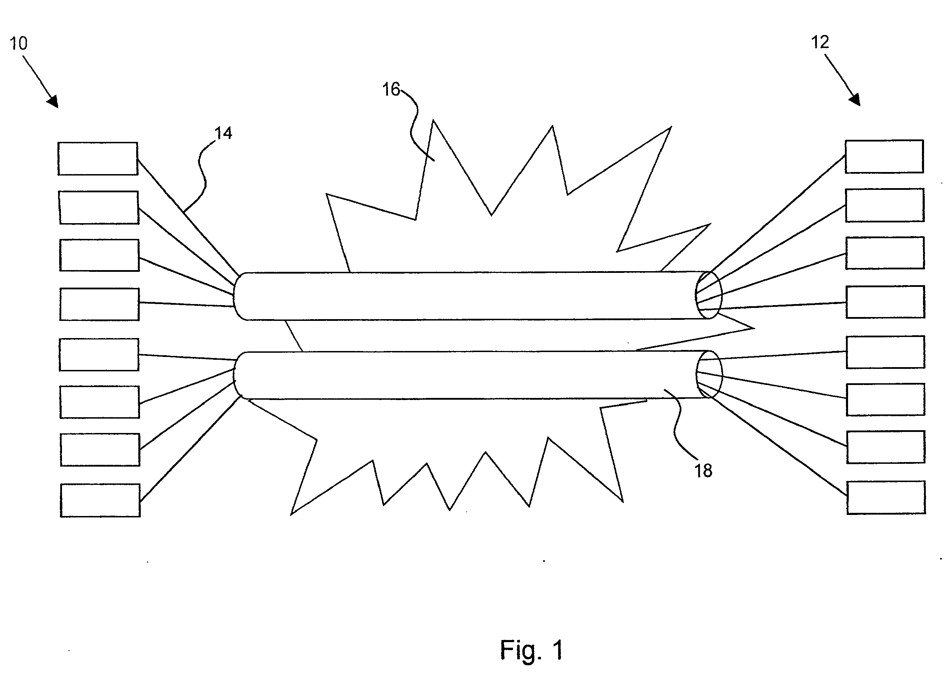

Reference is now made to Fig. 1 which is a simplified pictorial illustration of a modem pool arrangement useful in understanding the present invention. A modem pool, generally referenced 10, and comprising a plurality of individual modems is seen in communication with a modem pool, generally referenced 12, via a plurality of connections 14 over a telephone network 16. Connections 14 are typically copper wire pairs arranged in one or more bundles 18. The modem pools preferably operate in a coordinated manner, such as is described in Applicant/assignee's U.S. Patent Application No. 09/510,550 file February 22, 2000, and entitled "High Speed Access System Over Copper Cable Plant," that claims priority from United States Provisional Application Serial No. 60/121,228, filed February 23, 1999, and entitled "Access Express-Very High Data Rate Communication Channels Over Copper," both hereby incorporated by reference. The interference on each connection 14, the attenuation coefficients of the NEXT between connections 14, attenuation of each connection 14 from end to end, as well as the BER of each connection 14 may be measured using conventional techniques.

Where one or more data channels by which two modem pools communicate are contained within a single copper wire bundle, other wire pairs in the bundle are likely to be used by other "alien" services. In this case, the overall noise within the bundle is likely to be composed of self-caused near-end crosstalk (NEXT) and that of the alien services. Bundle noise may also come from external interferences such as Radio Frequency Interference (RFI) and noise from electric machinery. Where the modem pools require more than one bundle, one or more of the bundles are preferably completely dedicated to modem pool communications, thereby suffering only from self-NEXT. Normally, the transmission power spectral density (PSD) of each wire pair should comply with PSD regulations. The purpose of such regulations is to avoid the damaging effect of non-controlled cross disturbances of various DSL services that may share the same bundle.

In some DSL systems, such as S.HDSL, changing bit rates requires changing the PSD, as a lower bit rate corresponds to a lower transmission bandwidth, and vice versa. This is done in order to maintain constant transmission power in compliance with telecommunications regulations and standards. In a modem pool arrangement it would be possible to maintain a constant PSD for each channel. However, this would cause modem PSDs to overlap and degrade the overall performance where their wire pairs are close to each other, since the NEXT will reside in all frequencies. Thus, in cases where a complete bundle is dedicated to a modem pool or where a modem pool is spread across several bundles, a system for more effectively managing the PSD of each modem element in the modem pool is needed.

The signal-to-noise ratio (SNR) of the various modem pool channels within a bundle must also be managed properly. The modem SNR is a function of the channel capacity divided by the bit rate. A poor SNR figure means a poor bit error rate (BER). When a very high BER is sensed by a modem, it will eventually lose synchronization and stop transmitting data. It will then attempt to reconnect until a more reasonable BER is achieved. However, where a transmission is spread across a modem pool, a system for setting a rate for each modem in the pool in such a way that seeks to maximize the overall throughput of a transmission and its SNR while minimizing the overall BER would be advantageous.

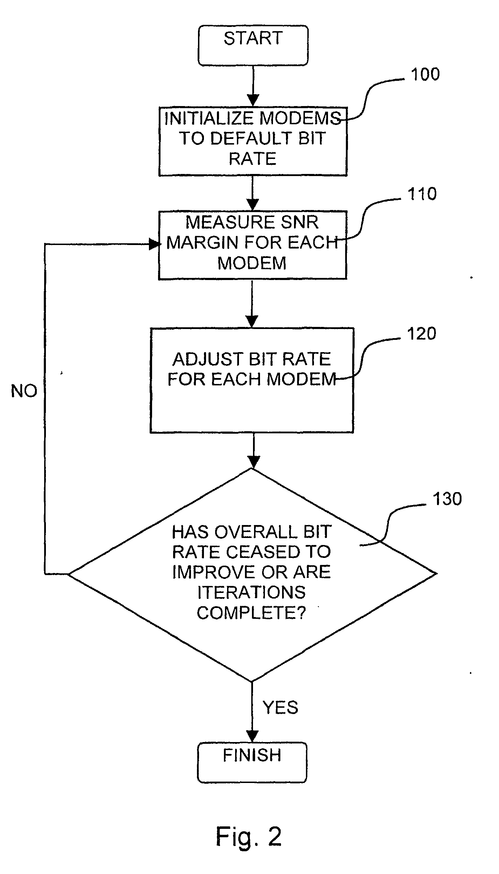

Reference is now made to Fig. 2 which is a simplified flowchart illustration of a method of static bandwidth management of the system of Fig. 1, operative in accordance with a preferred embodiment of the present invention. In the method of Fig. 2 all modems in the modem pool are initialized at a default bit rate, preferably concurrently (step 100). This default rate may be determined based on a previously used bit rate that provided a reasonably consistent BER and SNR. Alternatively, the default bit rate may be determined by measuring the wire attenuation using conventional means and interpolating the bit rate using heuristics such as a look-up table. The default bit rate may also be determined using prior knowledge of transmission wire parameters supplied by the telephone company, or by providing a best guess.

The SNR margin in dB is then measured by each modem as the difference between a modem's SNR and a reference SNR as described hereinbelow (step 110). A modem's SNR may be measured by the modem itself using any conventional means, such as at its equalizer output, its Vitterbi Decoder output, or its slicer. The SNR measurement may also be made by an apparatus external to the modem. The SNR margin is calculated as a function of maximum allowable BER in accordance with conventional techniques. For example, in a system utilizing G.shdsl modems, where the maximum BER is $10^{-7}$, a SNR of 22.3 dB is required. Thus, for example, a modem whose bit rate is set at 2.048Mbps and has an SNR of 24.6dB has an SNR margin of +2.3dB. A modem whose SNR margin is at or above a first predetermined threshold, such as 0, and is at or below a second predetermined threshold, which may vary for each modem, is said to have reached its optimal bit rate. The bit rate $B$ of each modem $i$ at a given iteration $n$ ($B_i^{(n)}$) is then adjusted according to the following recursive formula (step 120):

$$ B_i^{(n+1)} = B_i^{(n)} + \left( B_i^{(n)} \cdot \frac{M_i^{(n)}}{SNR_{ref}} \right) + w_i^{(n)} $$

where
$SNR_{ref}$ is the SNR that corresponds to the maximum BER,
$M_i$ is the SNR margin of a modem $i$ and is defined as the modem's SNR-$SNR_{ref}$, and
$w_i$ is uniformly distributed noise over [$-r/2$, $r/2$] where $r$ is the minimum bit rate increment (e.g., 64 Kbps for SDSL systems). This noise is preferably added before quantization to avoid any harm to the convergence of the algorithm that the quantization of separate fixed bit rates might cause.

$SNR_{ref}$ is dependent of the modulation scheme used. If a modem pool includes modems that all use the same modulation scheme, then $SNR_{ref}$ is typically constant for all modems in the modem pool. Where the modem pool includes modems that use different modulation schemes, then a different $SNR_{ref}$ may be used for each modulation scheme.

After a modem's bit rate has been adjusted, and preferably after all modem bit rate adjustments have been concurrently made in a single pass, steps 120 and 130 may be applied until the SNR margin of all modems have been optimized such that the overall bit rate no longer improves with each iteration, or, alternatively, for a predetermined number of iterations, such as 10 - 15 (step 130).

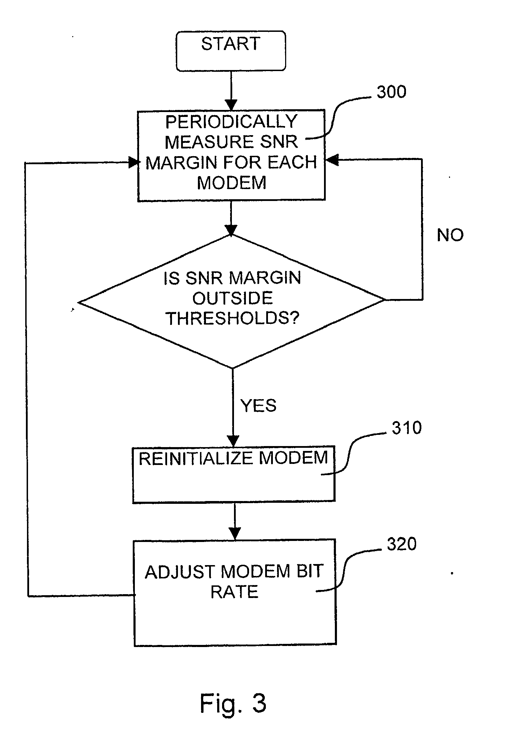

Reference is now made to Fig. 3 which is a simplified flowchart illustration of a method of dynamic bandwidth management of the system of Fig. 1, operative in accordance with a preferred embodiment of the present invention. In the method of Fig. 3 all modems in the modem pool are operating at steady state, preferably having been initialized and optimized in accordance with the method of Fig. 2. The SNR margin in dB is periodically measured for each modem (step 300). A modem whose SNR margin is below a first predetermined threshold or above a second predetermined threshold is reinitialized (step 310). The modem's bit rate is then adjusted according to step 120 of Fig. 2 (step 320). After the modem's bit rate has been adjusted its SNR margin is again measured (step 300). Steps 300 and 310 may be continually applied.

The methods of Figs. 2 and 3 above are preferably applied to modem pools in which each modem is a single-carrier DSL modem, such as in SDSL, HDSL, S.HDSL, VDSL, and QAM systems.

It is noted that modem bit rates may be limited by government regulations, industry standards, and/or hardware limitations. Such limitations may govern the highest and lowest possible modem bit rates. Thus, bit rate maxima and minima may be imposed such that if a bit rate adjustment as described herein would cause a modem to exceed its maximum bit rate or fall below its minimum bit rate, the bit rate adjustment is not applied, the modem SNR margin notwithstanding. Furthermore, should the measured bit rate of a modem exceed its maximum bit rate or fall below its minimum bit rate, a bit rate adjustment may be applied to bring the modem bit rate within the minimum and maximum bit rates or, alternatively, the modem may be shut off. It is also noted that both the minimum and maximum bit rates and the quantization of the bit rates may vary for each modem. Furthermore, the modems themselves may be of different single-carrier modulation methods or line codes.

The methods of Figs. 2 and 3 above may be applied simultaneously at two modem pools that are in communication with each other and that cannot accommodate different bit rates in the upstream and downstream directions. After each iteration is completed, both modem pools may negotiate the desired bit rates using conventional modem negotiation techniques. The rate that is decided for the $i^{th}$ modem may be chosen as the lower of the two bit rates computed for it and its counterpart modem. Where different bit rates may be accommodated in the upstream and downstream directions, the method of Figs. 2 and 3 may be carried out independently at both modem pools.

It is appreciated that one or more of the steps of any of the methods described herein may be omitted or carried out in a different order than that shown, without departing from the true scope of the invention.

While the methods and apparatus disclosed herein may or may not have been described with reference to specific hardware or software, the methods and apparatus have been described in a manner sufficient to enable persons of ordinary skill in the art to readily adapt commercially available hardware and software as may be needed to reduce any of the embodiments of the present invention to practice without undue experimentation and using conventional techniques.

While the present invention has been described with reference to a few specific embodiments, the description is intended to be illustrative of the invention as a whole and is not to be construed as limiting the invention to the embodiments shown. It is appreciated that various modifications may occur to those skilled in the art that, while not specifically shown herein, are nevertheless within the true scope of the invention.

**Claims**

1. A method for managing the bandwidth of a modem pool having at least two co-interfering modems, the method comprising:

    measuring an SNR margin for at least two of said co-interfering modems; and
    adjusting the bit rate *B* of each of said co-interfering modems *i* such that SNR margin of each of said co-interfering modems is between a first and a second predetermined threshold, the bit rate is adjusted according to the formula

$$B_i^{(n+1)} = B_i^{(n)} + \left( B_i^{(n)} \cdot \frac{M_i^{(n)}}{SNR_{ref}} \right) + w_i^{(n)}$$

    wherein: $M_i$ is the SNR margin of the of the modem *i* being adjusted,
    $SNR_{ref}$ is the SNR that corresponds to a maximum allowable BER, and $w_i$ is uniformly distributed noise over [-r/2, r/2] where *r* is a minimum bit rate increment.

2. A method according to claim 1 wherein said measuring step comprises measuring said SNR margin with respect to a maximum allowable BER, or wherein said adjusting step is performed for each of said modems concurrently, or wherein said first and second thresholds vary for at least two of said co-interfering modems, or wherein a minimum and a maximum bit rate vary for at least two of said co-interfering modems.

3. A method according to claim 1 wherein the method further comprises setting any of said modems in said modem pool to a first bit rate prior to said measuring step.

4. A method according to claim 3 wherein said setting step is performed for each of said modems concurrently.

5. A method according to any one of the preceding claims wherein said at least two co-interfering modems use different modulation schemes, wherein said $SNR_{ref}$ differs for each of said co-interfering modems, and wherein each $SNR_{ref}$ corresponds to one of said modulation schemes.

6. A method according to any one of the preceding claims wherein said measuring and adjusting steps are performed a predetermined number of iterations, or a plurality of iterations, or a plurality of iterations until the SNR margin of all of said modems have been optimized such that the overall bit rate no longer improves with each iteration.

7. Apparatus for managing the bandwidth of a modem pool having at least two co-interfering modems comprising:

   means for measuring an SNR margin for at least two of said co-interfering modems; and means for adjusting the bit rate $B$ of each of said co-interfering modems $i$ such that SNR margin of each of said co-interfering modems is between a first and a second predetermined threshold, the bit rate is adjusted according to the formula

$$B_i^{(n+1)} = B_i^{(n)} + \left( B_i^{(n)} \cdot \frac{M_i^{(n)}}{SNR_{ref}} \right) + w_i^{(n)}$$

   wherein: $M_i$ is the SNR margin of the of the modem $i$ being adjusted,

   $SNR_{ref}$ is the SNR that corresponds to a maximum allowable BER, and $w_i$ is uniformly distributed noise over [-r/2, r/2] where $r$ is a minimum bit rate increment.

8. Apparatus according to claim 7 wherein said means for measuring measures said SNR margin with respect to a maximum allowable BER, or wherein said means for adjusting is operative to adjust each of said modems concurrently, or wherein said first and second thresholds vary for at least two of said co-interfering modems, or wherein a minimum and a maximum bit rate vary for at least two of said co-interfering modems.

9. Apparatus according to claim 7 and further comprising means for setting any of said modems in said modem pool to a first bit rate prior to said measuring step.

10. Apparatus according to claim 9 wherein said means for setting is operative to set each of said modems concurrently.

11. Apparatus according to any one of claims 7 to 10 wherein said at least two co-interfering modems use different modulation schemes, wherein said $SNR_{ref}$ differs for each of said co-interfering modems, and wherein each $SNR_{ref}$ corresponds to one of said modulation schemes.

12. Apparatus according to any one of claims 7 to 11 wherein said means for measuring and adjusting are operative to measure and adjust a predetermined number of iterations, or a plurality of iterations, or a plurality of iterations until the SNR margin of all of said modems have been optimized such that the overall bit rate no longer improves with each iteration.

**Patentansprüche**

1. Verfahren für das Management der Bandbreite eines Modem-Pools, der wenigstens zwei sich gegenseitig störende Modems enthält, wobei das Verfahren umfasst:

   Messen einer SNR-Grenze für wenigstens zwei der sich gegenseitig störenden Modems; und
   Einstellen der Bitrate $B$ jedes der sich gegenseitig störenden Modems i in der Weise, dass die SNR-Grenze für jedes der sich gegenseitig störenden Modems zwischen einem ersten und einem zweiten vorgegebenen Schwellenwert liegt, wobei die Bitrate gemäß der folgenden Formel eingestellt wird:

$$B_i^{(n+1)} = B_i^{(n)} + \left( B_i^{(n)} \cdot \frac{M_i^{(n)}}{SNR_{ref}} \right) + w_i^{(n)}$$

   wobei: $M_i$ die SNR-Grenze des Modems i, das eingestellt wird, ist,

   $SNR_{ref}$ das SNR ist, das einem maximal zulässigen BER entspricht,

   und $w_i$ gleichmäßig verteiltes Rauschen über [-r/2, r/2] ist, wobei r ein minimales Bitraten-Inkrement ist.

2. Verfahren nach Anspruch 1, bei dem der Messschritt das Messen der SNR-Grenze in Bezug auf ein maximal zulässiges BER ist oder bei dem der Einstellschritt für jedes der Modems konkurrent ausgeführt wird oder bei dem sich der erste oder der zweite Schwellenwert für wenigstens zwei der sich gegenseitig störenden Modems verändern oder bei der eine minimale Bitrate und eine maximale Bitrate sich für wenigstens zwei der sich gegenseitig störenden Modems verändern.

3. Verfahren nach Anspruch 1, wobei das Verfahren ferner das Setzen irgendeines der Modems in dem Modem-Pool auf eine erste Bitrate vor dem Messschritt umfasst.

4. Verfahren nach Anspruch 3, bei dem der Setzschritt für jedes der Modems konkurrent ausgeführt wird.

5. Verfahren nach einem der vorhergehenden Ansprüche, bei dem die wenigstens zwei sich gegenseitig störenden Modems verschiedene Modulationsschemata verwenden, wobei sich das $SNR_{ref}$ für jedes der sich gegenseitig störenden Modems unterscheidet und wobei jedes $SNR_{ref}$ einem der Modulationsschemata entspricht

6. Verfahren nach einem der vorhergehenden Ansprache, bei dem der Messschritt und der Einstellschritt in einer vorgegebenen Anzahl von Iterationen oder in mehreren Iterationen oder in mehreren Iterationen, bis die SNR-Grenze aller Modems optimiert worden ist, so dass sich die gesamte Bitrate nicht mehr mit jeder Iteration verbessert, ausgeführt werden.

7. Vorrichtung für das Management der Bandbreite eines Modem-Pools, der wenigstens zwei sich gegenseitig störende Modems enthält, mit:

Mitteln, um eine SNR-Grenze für wenigstens zwei der sich gegenseitig störenden Modems zu messen; und
Mitteln, um die Bitrate B für jedes der sich gegenseitig störenden Modems (i) in der Weise einzustellen, dass die SNR-Grenze jedes der sich gegenseitig störenden Modems zwischen einem ersten und einem zweiten vorgegebenen Schwellenwert liegt, wobei die Bitrate gemäß der folgenden Formel eingestellt wird:

$$B_i^{(n+1)} = B_i^{(n)} + \left( B_i^{(n)} \cdot \frac{M_i^{(n)}}{SNR_{ref}} \right) + w_i^{(n)}$$

wobei: $M_i$ die SNR-Grenze des Modems i, das eingestellt wird, ist,
$SNR_{ref}$ das SNR ist, das einem maximal zulässigen BER entspricht,
und $w_i$ ein gleichmäßig verteiltes Rauschen über [-r/2, r/2] ist, wobei r ein minimales Bitraten-Inkrement ist.

8. Vorrichtung nach Anspruch 7, bei der die Messmittel die SNR-Grenze in Bezug auf ein maximal zulässiges BER messen oder bei der die Einstellmittel in der Weise arbeiten, dass jedes der Modems konkurrent eingestellt wird, oder bei der sich der erste und der zweite Schwellenwert für wenigstens zwei der sich gegenseitig störenden Modems verändern oder bei der sich eine minimale und eine maximale Bitrate für wenigstens zwei der sich gegenseitig störenden Modems verändern.

9. Vorrichtung nach Anspruch 7, die ferner Mittel umfasst, um vor dem Messschritt irgendeines der Modems in dem Modem-Pool auf eine erste Bitrate zu setzen.

10. Vorrichtung nach Anspruch 9, bei der die Setzmittel in der Weise arbeiten, dass sie jedes der Modems konkurrent setzen.

11. Vorrichtung nach einem der Ansprüche 7 bis 10, bei der die wenigstens zwei sich gegenseitig störenden Modems unterschiedliche Modulationsschemata verwenden, wobei sich das $SNR_{ref}$ für jedes der sich gegenseitig störenden Modems unterscheidet und wobei jedes $SNR_{ref}$ einem der Modulationsschemata entspricht.

12. Vorrichtung nach einem der Ansprüche 7 bis 11, bei der die Mittel zum Messen und Einstellen in der Weise arbeiten, dass sie eine vorgegebene Anzahl von Iterationen oder mehrere Iterationen oder mehrere Iterationen, bis die SNR-Grenze aller Modems optimiert worden ist, so dass sich die gesamte Bitrate nicht mehr mit jeder Iteration verbessert, messen und einstellen.

**Revendications**

1. Procédé pour gérer la largeur de bande d'un ensemble de modems comprenant au moins deux modems co-interférants, le procédé comprenant:

la mesure d'une marge SNR pour au moins deux desdits modems co-interférants; et
le réglage du débit binaire *B* de chacun desdits modems co-interférants *i* de telle sorte que la marge SNR de chacun desdits modems co-interférants soit comprise entre un premier seuil et un deuxième seuil prédéterminés, le débit binaire étant réglé selon la formule:

$$B_i^{(n+1)} \quad = \quad B_i^{(n)} + \left( B_i^{(n)} \cdot \frac{M_i^{(n)}}{SNR_{réf}} \right) + w_i^{(n)}$$

dans laquelle: $M_i$ est la marge SNR du modem *i* réglé;

$SNR_{réf}$ est le SNR correspondant à un BER maximum autorisable; et

$w_i$ est le bruit uniformément distribué sur [-r/2, r/2], où $r$ est un incrément de débit binaire minimum.

2. Procédé selon la revendication 1, dans lequel ladite étape de mesure comprend la mesure de ladite marge SNR par rapport à un BER maximum autorisable, ou dans lequel ladite étape de réglage est exécutée simultanément pour chacun desdits modems, ou dans lequel lesdits premier et deuxième seuils varient pour au moins deux desdits modems co-interférants, ou dans lequel un débit binaire minimum et un débit binaire maximum varient pour au moins deux desdits modems co-interférants.

3. Procédé selon la revendication 1, dans lequel le procédé comprend en outre le réglage de n'importe lequel desdits modems dans ledit ensemble de modems à un premier débit binaire avant ladite étape de mesure.

4. Procédé selon la revendication 3, dans lequel ladite étape de réglage est exécutée simultanément pour chacun desdits modems.

5. Procédé selon l'une quelconque des revendications précédentes, dans lequel lesdits au moins deux modems co-interférants utilisent des schémas de modulation différents, dans lequel ledit $SNR_{réf}$ diffère pour chacun desdits modems co-interférants, et dans lequel chaque $SNR_{réf}$ correspond à un desdits schémas de modulation.

6. Procédé selon l'une quelconque des revendications précédentes, dans lequel lesdites étapes de mesure et de réglage sont exécutées un nombre d'itérations prédéterminé, ou une pluralité d'itérations, ou une pluralité d'itérations jusqu'à ce que la marge SNR de la totalité desdits modems ait été optimisée de telle sorte que le débit binaire total ne s'améliore plus lors de chaque itération.

7. Dispositif pour gérer la largeur de bande d'un ensemble de modems comprenant au moins deux modems co-interférants, comprenant:

des moyens pour mesurer une marge SNR pour au moins deux desdits modems co-interférants; et
des moyens pour régler le débit binaire $B$ de chacun desdits modems co-interférants $i$ de telle sorte que la marge SNR de chacun desdits modems co-interférants soit comprise entre un premier seuil et un deuxième seuil prédéterminés, le débit binaire étant réglé selon la formule:

$$B_i^{(n+1)} \quad = \quad B_i^{(n)} + \left( B_i^{(n)} \cdot \frac{M_i^{(n)}}{SNR_{réf}} \right) + w_i^{(n)}$$

dans laquelle: $M_i$ est la marge SNR du modem $i$ réglé;

$SNR_{réf}$ est le SNR correspondant à un BER maximum autorisable; et

$w_i$ est le bruit uniformément distribué sur [-r/2, r/2], où $r$ est un incrément de débit binaire minimum.

8. Dispositif selon la revendication 7, dans lequel lesdits moyens de mesure mesurent ladite marge SNR par rapport à un BER maximum autorisable, ou dans lequel lesdits moyens de réglage servent à régler chacun desdits modems simultanément, ou dans lequel lesdits premier et deuxième seuils varient pour au moins deux desdits modems co-interférants, ou dans lequel un débit binaire minimum et un débit binaire maximum varient pour au moins deux desdits modems co-interférants.

9. Dispositif selon la revendication 7, et comprenant en outre des moyens pour régler n'importe lequel desdits modems dans ledit ensemble de modems à un premier débit binaire avant ladite étape de mesure.

10. Dispositif selon la revendication 9, dans lequel lesdits moyens de réglage servent à régler chacun desdits modems simultanément.

11. Dispositif selon l'une quelconque des revendications 7 à 10, dans lequel lesdits au moins deux modems co-interférants utilisent des schémas de modulation différents, dans lequel ledit $SNR_{réf}$ diffère pour chacun desdits modems co-interférants, et dans lequel chaque $SNR_{réf}$ correspond à un desdits schémas de modulation.

12. Dispositif selon l'une quelconque des revendications 7 à 11, dans lequel lesdites étapes de mesure et de réglage servent à mesurer et à régler un nombre d'itérations prédéterminé, ou une pluralité d'itérations, ou une pluralité d'itérations jusqu'à ce que la marge SNR de la totalité desdits modems ait été optimisée de telle sorte que le débit binaire total ne s'améliore plus lors de chaque itération.

Fig. 1

EP 1 328 081 B1

START

INITIALIZE MODEMS
TO DEFAULT BIT
RATE ⟶ 100

MEASURE SNR
MARGIN FOR EACH
MODEM ⟶ 110

ADJUST BIT RATE
FOR EACH MODEM ⟶ 120

NO

HAS OVERALL BIT
RATE CEASED TO
IMPROVE OR ARE
ITERATIONS
COMPLETE? ⟶ 130

YES

FINISH

Fig. 2

START

PERIODICALLY
MEASURE SNR
MARGIN FOR EACH
MODEM — 300

IS SNR MARGIN
OUTSIDE
THRESHOLDS?

NO

YES

REINITIALIZE MODEM — 310

ADJUST MODEM BIT
RATE — 320

Fig. 3